(19) Europäisches Patentamt
European Patent Office
Office européen des brevets

(11) **EP 1 629 126 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
**C21C 5/52** *(2006.01)*        **C21C 5/54** *(2006.01)*
**C21C 7/00** *(2006.01)*

(21) Anmeldenummer: **04729075.4**

(22) Anmeldetag: **23.04.2004**

(86) Internationale Anmeldenummer:
**PCT/EP2004/004312**

(87) Internationale Veröffentlichungsnummer:
**WO 2004/104232 (02.12.2004 Gazette 2004/49)**

(54) **VERFAHREN ZUR ERZEUGUNG EINER SCHAUMSCHLACKE AUF HOCHCHROMHALTIGEN SCHMELZEN IN EINEM ELEKTROOFEN**

METHOD FOR PRODUCING FOAMED SLAG ON HIGH-CHROMIUM MELTS IN AN ELECTRIC FURNACE

PROCEDE DE PRODUCTION D'UN LAITIER EXPANSE SUR DES FONTES A FORTE TENEUR EN CHROME DANS UN FOUR ELECTRIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **24.05.2003 DE 10323505**

(43) Veröffentlichungstag der Anmeldung:
**01.03.2006 Patentblatt 2006/09**

(73) Patentinhaber: **SMS Siemag AG**
**40237 Düsseldorf (DE)**

(72) Erfinder:
• **ROSE, Lutz**
**47259 Duisburg (DE)**

• **REICHEL, Johann**
**40489 Düsseldorf (DE)**

(74) Vertreter: **Klüppel, Walter et al**
**Patentanwälte Hemmerich & Kollegen**
**Hammerstrasse 2**
**57072 Siegen (DE)**

(56) Entgegenhaltungen:
**EP-A- 0 655 508      EP-A- 0 829 545**
**WO-A-00/14287      WO-A-01/40528**

**Beschreibung**

Die Erfindung betrifft ein Verfahren zur Erzeugung einer Schaumschlacke auf hochchromhaltigen Stahlschmelzen in einem Elektrolichtbogenofen, wobei ein Gemisch aus einem Metalloxid und Kohlenstoff in den Ofen eingegeben, in der Schlacke das Metalloxid durch den Kohlenstoff reduziert wird und die entstehenden Gase durch Blasenbildung das Schlackenaufschäumen hervorrufen.

Beim Betreiben von Elektrolichtbogenöfen werden die Charge, d.h. vor allem Schrott, und Legierungen mit den Lichtbögen der Elektroden, die von oben in das Ofengefäß ragen, aufgeschmolzen. Hierbei erfüllt die Schlacke neben ihrer Primärfunktion, d.h. der Entfernung von unerwünschten Bestandteilen aus der Schmelze, eine Schutzfunktion im schaumförmigen Zustand. In diesem Zustand umhüllt die Schlacke den Raum zwischen den Elektrodenenden und der Metalloberfläche und schützt die Feuerfest-Ausmauerung des Ofens vor der Strahlungsenergie des Elektrolichtbogens. Aufgrund der schwachen Wärmeleitfähigkeit der aufgeschäumten Schlacke wird die Strahlung des Lichtbogens gegenüber der Wandung des Elektroofens stark reduziert und damit das Energieeinbringen in die metallische Schmelze verbessert.

Bei nicht rostfreien Stählen bzw. Stählen mit niedrigem Chrom-Gehalt wird die Schaumschlacke durch gleichzeitiges Einblasen von Kohlenstoff und Sauerstoff auf die Schlacke bzw. in das Stahlbad erzeugt. Das bei den ablaufenden Reaktionen

$$2\,[C] + \{O_2\} \bullet\; 2\,\{CO\}$$

$$2\,\{CO\} + \{O_2\} \bullet\; 2\,\{CO_2\}$$

entstehendes Gas führt zu einem Aufschäumen der Schlacke. Zudem reduziert der Kohlenstoff das Eisenoxid zu Eisen und ebenfalls zu Kohlenmonoxid laut

$$(FeO) + [C] \rightarrow [Fe] + \{CO\}.$$

Die aufgeschäumte Schlacke hüllt die Elektroden ein und befindet sich als Schutzschicht zwischen den elektrischen Lichtbögen und der Ofenwandung.

Aus den Druckschriften WO 00/14287 und WO 01/40528 A1 sind Verfahren zur Erzeugung einer Schaumschlacke bekannt, bei denen der Schlacke ein Granulat zugemischt wird.

Die Druckschrift EP 0 655 508 beschreibt ein Verfahren zur Erzeugung einer Schaumschlacke in einem Elektrolichtbogenofen durch Einblasen von Pulver oder alternativ durch Einblasen von ovalen Formteilen in den Elektrolichtbogenofen.

Bei hochchromhaltigen Schmelzen reagiert der eingeblasene Kohlenstoff prinzipiell als Reduktionselement des Chromoxids. Die o.g. Reaktionen haben in dem metallischen Bad geringe Bedeutung. Zudem ist auch der Gehalt an Eisenoxid in der Schlacke zu gering, um eine Aufschäumung der Schlacke zufrieden stellend zu garantieren. Insgesamt ist es bei hochchromhaltigen Schmelzen wegen der erwähnten Unterschiede schwierig, in der Überhitzungsphase eine schäumende Schlacke zu erzeugen.

Hierzu schlägt die EP 0 829 545 B1, die ein Verfahren zur Herstellung einer Schaumsschlacke auf schmelzflüssigen rostfreiem Stahl in einem Elektroofen betrifft, vor, dass in die Schlacke ein Pulver eingeführt wird, das sich aus einem Metalloxid, entweder Zinkoxid oder Bleioxid, und Kohlenstoff zusammensetzt. Das in dem Pulver enthaltene Oxid wird reduziert, indem es mit dem Kohlenstoff reagiert. In der Schlacke werden Blasen gebildet, die im Wesentlichen aus dem Kohlenmonoxid bestehen, wobei die in der Schlacke enthaltenen Blasen die Schlacke aufschäumen lassen. Das Pulver wird hierzu mit Hilfe eines Injektionsmediums, beispielsweise Stickstoff, in die Schlacke eingeführt.

Nach dem Stand der Technik wird demnach das reaktionsfähige Gemisch als Pulver in die Schlacke bzw. die Schmelze eingeführt. Aufgrund der mit der Pulverform verbundenen relativ großen Oberfläche kommt es zu einer kurzen, heftigen Reaktion. Zudem findet die Reaktion örtlich begrenzt in der Nähe der Ein spritz- bzw. der Einblasvorrichtung und hier insbesondere an der Spitze der Einblaslanze im Schmelzbad statt.

Ausgehend von einem derartigen Stand der Technik liegt der Erfindung die Aufgabe zugrunde, ein Verfahren zur Erzeugung einer Schaumschlacke auf schmelzflüssigem hochchromhaltigen Stählen in einem Elektroofen zu schaffen, wobei die Vorgänge, die die Schaumreaktion auslösen, kontrolliert ablaufen sollen.

Diese Aufgabe wird durch ein Verfahren mit den Merkmalen des Anspruchs 1 gelöst. Vorteilhafte Weiterentwicklungen sind in den Unteransprüchen beschrieben.

Nach der Erfindung wird ein Gemisch aus einem Metalloxid und Kohlenstoff nicht als Pulver, sondern als gepresste und/oder mit einem Bindemittel versehene Formteile in form von Pellets in den Ofen chargiert und wird die Dichte der Formteile durch Zusatz eines Eisenträgers so eingestellt, daβ die Formteile in der Schlacke Schurimmen. Neben der bevorzugten Pelletform ist beispielsweise auch eine andere Form, wie die Briquettform, möglich. Durch gezielte Einstellung der Eigenschaften der Formteile, nachfolgend als Pellets konkretisiert, wird im Gegensatz zu einem Einsatz in Pulverform die Gasentwicklung hinsichtlich Ort, Art und Zeit - insbesondere des zeitlichen Startpunkts, der Geschwindigkeit, des Grads der Reaktion und/oder der Länge der Reaktion • kontrollierbar.

Insbesondere werden die Dichteeigenschaften der Pellets über den Pressdruck und/oder die Art und Menge eines beigemischten Eisenträgers, beispielsweise Ferronickel, und eines Bindemittels eingestellt. Hierbei wird nach einer bevorzugten Variante die Dichte der Pressteile so eingestellt, dass die Pellets in der Schlacke nahe oder unmittelbar an der Phasengrenze Metall-Schlacke selbst schwimmen. Durch die Zugabe des Eisenträgers wird sichergestellt, dass die Pellets schwerer sind als Schlacke, aber leichter sind als die Metallschmelze. Die Gasentwicklung läuft somit örtlich definiert ab, nämlich in der Schlacke an der Grenze Metall und Schlacke. Auf diese Weise kommt es zu keiner Berührung zwischen Pellets und Metallbad, wodurch ein Aufkohlen der Schmelze verhindert wird. Es ist auch möglich, die Pelleteigenschaften so einzustellen, dass sie eine unterschiedliche Platzierung zwischen dem Schmelzebad und der Schlacke annehmen können. Dann wird gewährleistet, dass die Schaum auslösenden Vorgänge nur in der Schlacke ablaufen, um somit die Effektivität zu erhöhen.

Des Weiteren sollen die Pellets eine solche Dichte bzw. Verpressung aufweisen, dass sie gleichmäßig und nur langsam zerfallen, wobei die Gasentwicklung und damit die Aufschäumreaktion gleichmäßig und relativ lange abläuft. Über eine noch stärkere Pressverdichtung ist es darüber hinaus möglich zu erreichen, dass die Reaktionen zeitverzögert ablaufen. Dies verhindert eine zu frühzeitige Reaktion bzw. gewährleistet den Start der Reaktion erst dann, wenn die Pellets in der Schlacke verteilt sind.

Die Gasentwicklung kann des Weiteren auch durch die Größe der Pellets gezielt eingestellt werden. Dadurch, dass die Pellets einen im Verhältnis größeren Durchmesser und damit eine kleinere Oberfläche im Vergleich zu Pulver haben, kann die Aufschäumreaktion relativ lange bei gleichmäßiger Gasentwicklung aufrechterhalten bleiben.

Bei den Grundbestandteilen Metall- (Me) oxid und Kohlenstoff laufen folgende Reaktionen ab:

$$(Me_xO_n)+ [C] \bullet \quad x\,[Me] + \{CO\}$$

$$2\,\{CO\} + \{O_2\} \bullet \quad 2\,\{CO_2\}$$

Für das Gemisch zur Herstellung der Pellets können Abfallprodukte aus der Stahlherstellung verwendet werden, wie beispielsweise Kohlenstoff von Restelektroden oder Abfallzunderteile. Insbesondere bei solchen Gemischen empfiehlt sich der Einsatz von Bindemitteln.

Neben den Grundelementen Metalloxid und Kohlenstoff wird zusätzlich ein Schlackenbildner, insbesondere Kalkstein, in die vorgeschlagene Pelletform verpresst. Aufgrund des Kalksteins wird die gewünschte $CO/CO_2$-Bildung zusätzlich verstärkt.

Des Weiteren kann zusätzlich einen Schlackenverflüssiger, vorzugsweise $CaF_2$, mit verpresst bzw. gebunden werden. Damit wird dem Umstand entgegen gewirkt, dass chromhaltige Schlacken mit steigendem Chromoxidgehalt immer zähflüssiger werden.

Auch empfiehlt es sich, ein Reduktionsmittel, wie Silizium und/oder Aluminium, in einen Teil der Pellets, insbesondere zusammen mit Kalkstein, einzupressen, um den Chromoxidgehalt in der Schlacke zu kontrollieren. Diese Reduktionsmittel reduzieren den Chromoxidgehalt in der Schlacke und senken damit den Gehalt des Chroms in der Schlacke. Zudem wird das Schäumen der Schlacke verbessert.

Im Gegensatz zu Pulver, das lokal eingespritzt werden muss, werden die Pellets an verschiedenen Stellen des Ofens über den Ofendeckel und/oder die Seitenwände des Ofens zugegeben. Dies ist mit Pulver nicht möglich, weil große Teile des Pulvers von der Entstaubungsanlage des Ofens abgesaugt würden. Es empfiehlt sich, zusätzlich die Pellets gerichtet in die Nähe und unmittelbar an die Hot Spots der Elektroden in die Schlacke einzubringen, um die Aufschäumreaktion insbesondere an den Elektroden ablaufen zu lassen.

Weitere Einzelheiten und Vorteile der Erfindung ergeben sich aus der nachfolgenden Beschreibung der Figuren.

Es zeigen hierbei:

Fig. 1    schematisch den Querschnitt eines Elektrolichtbogenofens mit Zugabevorrichtungen für die Schlackschäumpellets;

Fig. 2    den Ofen der Fig. 1 von oben gesehen.

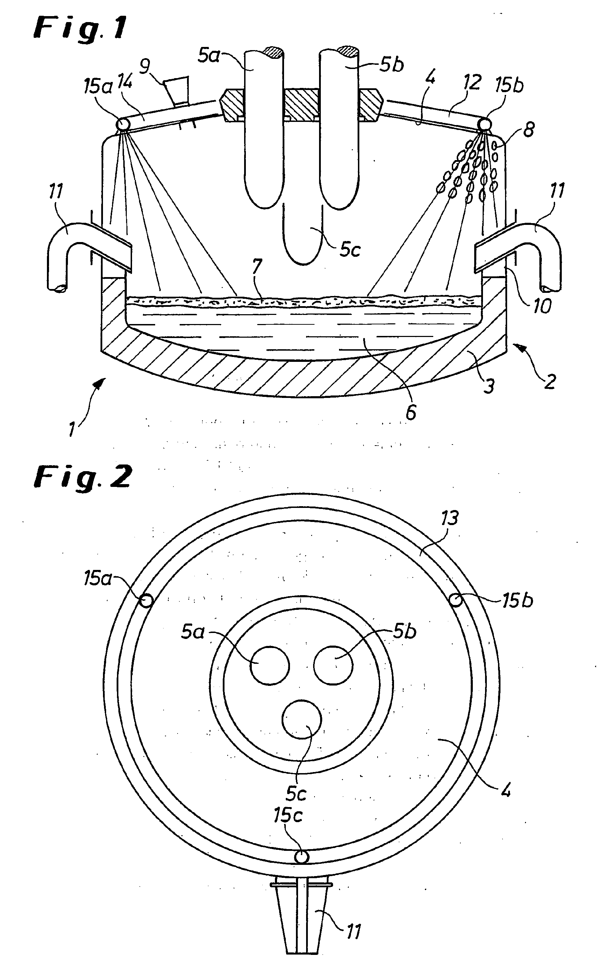

Der in Fig. 1 dargestellte Elektrolichtbogenofen 1 setzt sich aus einem Ofengefäß 2 mit feuerfester Wandung 3 sowie einem Ofendeckel 4 zusammen. Nach der Chargierung von Schrott und Legierungsbestandteilen werden - in diesem Fall - drei Elektroden 5a-c von oben kommend in das Ofeninnere gefahren. Aufgrund der sich bildenden Lichtbögen wird das feste Material aufgeschmolzen. Es bildet sich eine auf der Schmelze 6 schwimmende Schlackenschicht 7 aus. Damit eine Aufschäumreaktion der Schlacke 7 zwischen den Elektroden 5a-c und der feuerfesten Ofenwandung 3 stattfindet, wird Schlackschäummaterial als Formteil 8, nämlich in Form von Pellets, in das Ofeninnere eingegeben. Vorzugsweise werden die Pellets über den Ofendeckel 4 und hier über das 5. Deckelloch 9 und/oder die Seitenwände 10 chargiert. Hierzu sind Einblassysteme mit Einblasleitungen bzw. Gravitationsfördersysteme 11, die sich durch die seitlichen Ofenwände 10 erstrecken, vorgesehen. Anstelle der Einblasleitungen können auch Einblaslanzen verwendet werden.

Alternativ oder zusätzlich eignet sich zum Chargieren der Pellets auch ein pneumatisches Fördersystem 12 aus Ringleitungen. Dieses weist eine entlang des Deckels 4 verlaufende Ringleitung 13 auf, wie sie aus Fig. deutlich wird, die gleichzeitig auch radial zum Deckel verlaufende Ringleitungsabschnitte 14 aufweist. In den Ringleitungen 13, 14 bzw. der entsprechenden Deckelwand sind bei dem gezeigten Beispiel drei Chargieröffnungen 15 a-c eingebracht. Über dieses System 12 werden die Pellets gleichmäßig über den Ofenquerschnitt in die Ofenschlacke 7 eingebracht. Die Chargieröffnungen 15a-c sind hierbei so angeordnet, dass die Pellets in die Nähe der Hot Spots mit der Schlacke 7 reagieren.

Die Pellets schwimmen in der Schlacke 7 und reagieren dort kontrolliert nach Ort, Zeit und Art hinsichtlich der gewünschten Gasentwicklung und damit Aufschäumreaktion. Insbesondere wird über die Einstellung der Dichte und der Größe der Pellets erreicht, dass der Gasentwicklungsprozess möglichst gleichmäßig, relativ lange und nicht zu heftig abläuft. Eine kontrollierte Reaktion an der Oberfläche der Pellets führt zu einem gleichmäßigen Schäumen der Schlacke.

Bezugszeichenliste:

| 1 | Elektrolichtbogenofen |
| 2 | Ofengefäß |
| 3 | Feuerfeste Wandung |
| 4 | Ofendeckel |
| 5 | Elektroden |
| 6 | Schmelze |
| 7 | Schlacke |
| 8 | Formteile (Pellets) |
| 9 | 5. Deckelloch |
| 10 | Seitenwände des Ofens |
| 11 | Einblasleitung |
| 12 | Pneumatisches Fördersystem |
| 13 | Ringleitung |
| 14 | Ringleitungsabschnitte |
| 15 | Chargieröffnungen |

**Patentansprüche**

1. Verfahren zur Erzeugung einer Schaumschlacke (7) auf hochchromhaltigen Stahlschmelzen (6) in einem Elektrolichtbogenofen (1), wobei ein Gemisch aus einem Metalloxid und Kohlenstoff in den Ofen (1) eingegeben wird, wobei in der Schlacke (7) das Metalloxid durch den Kohlenstoff reduziert wird und die entstehenden Gase in der Schlacke Blasen bilden und diese somit die Schlacke aufschäumen,
   **dadurch gekennzeichnet,**
   **dass** das Gemisch aus Metalloxid und Kohlenstoff als gepresste und/oder mit einem Bindemittel versehene Formteile (8) in Form von Pellets in den Ofen eingeführt wird, und
   **dass** die Dichte der Formteile (8) durch Zusatz eines Eisenträgers so eingestellt wird, dass die Formteile in der Schlacke (7) schwimmen.

2. Verfahren nach Anspruch 1,
   **dadurch gekennzeichnet,**

**dass** die Dichte der Formteile (8) so eingestellt wird, dass sie in der Schlacke nahe der Phasengrenze Schmelze (6) und Schlacke (7) schwimmen.

3. Verfahren nach einem der Ansprüche 1 bis 2,
   **dadurch gekennzeichnet,**
   **dass** die Dichte der Formteile (8) so eingestellt wird, dass sie in der Schlacke (7) gleichmäßig und langsam zerfallen und die Gasentwicklung gleichmäßig und relativ lange abläuft.

4. Verfahren nach einem der Ansprüche 1 bis 3,
   **dadurch gekennzeichnet,**
   **dass** die Dichte der Formteile (8) so eingestellt wird, dass sie zeitverzögert zerfallen.

5. Verfahren nach einem der Ansprüche 1 bis 4,
   **dadurch gekennzeichnet,**
   **dass** dem Gemisch zusätzlich ein Schlackenbildner, vorzugsweise Kalkstein, zugegeben wird.

6. Verfahren nach einem der Ansprüche 1 bis 5,
   **dadurch gekennzeichnet,**
   **dass** dem Gemisch zusätzlich ein Schlackenverflüssiger, vorzugsweise $CaF_2$, zugegeben wird.

7. Verfahren nach einem der Ansprüche 1 bis 6,
   **dadurch gekennzeichnet,**
   **dass** dem Gemisch zusätzlich ein Reduktionsmittel, vorzugsweise Silizium und/oder Aluminium, zugegeben wird.

8. Verfahren nach einem der Ansprüche 1 bis 7,
   **dadurch gekennzeichnet,**
   **dass** die Formteile (8) über die Seitenwände (10) und/oder den Ofendeckel (4) des Elektroofens (1) eingegeben werden.

9. Verfahren nach einem der Ansprüche 1 bis 8,
   **dadurch gekennzeichnet,**
   **dass** die Formteile (8) gerichtet in die Nähe oder unmittelbar an die Hot Spots der Elektroden (5a-c) in die Schlacke (7) eingeführt werden.

**Claims**

1. Method of producing a foamed slag (7) on steel melts (6), which have high chromium content, in an electric arc furnace (1), wherein a mixture of a metal oxide and carbon is introduced into the furnace (1) and wherein the metal oxide is reduced in the slag (7) by the carbon and the resulting gases form bubbles in the slag and these thus foam up the slag, **characterised in that** the mixture of metal oxide and carbon is introduced into the furnace as moulded pieces (8), which are press-moulded and/or provided with a binder, in the form of pellets and that the density of the moulded pieces (8) is so set by addition of an iron carrier that the moulded pieces float in the slag (7).

2. Method according to claim 1, **characterised in that** the density of the moulded pieces (8) is so set that they float in the slag near the phase boundary of melt (6) and slag (7).I

3. Method according to one of claims 1 and 2, **characterised in that** the density of the moulded pieces (8) is so set that they uniformly and slowly disintegrate in the slag (7) and the development of gas takes place uniformly over and a relatively long time.

4. Method according to any one of claims 1 to 3, **characterised in that** the density of the moulded pieces (8) is so set that they disintegrate delayed in time.

5. Method according to any one of claims 1 to 4, **characterised in that** a slag former, preferably limestone, is additionally added to the mixture.

6. Method according to any one of claim 1 to 5, **characterised in that** a slag liquefying agent, preferably $CaF_2$, is

additionally added to the mixture.

7. Method according to any one of claims 1 to 6, **characterised in that** a reducing agent, preferably silicon and/or aluminium, is additionally added to the mixture.

8. Method according to any one of claims 1 to 7, **characterised in that** the moulded pieces (8) are introduced by way of the side walls (10) and/or the furnace roof (4) of the electric furnace (1).

9. Method according to any one of claims 1 to 8, **characterised in that** the moulded pieces (8) are introduced into the slag (7) oriented towards the vicinity of or directly at the hot spots of the electrodes (5a-c).

**Revendications**

1. Procédé pour la production d'un laitier mousseux (7) sur de l'acide liquide à haute teneur en chrome (6) dans un four à arc électrique (1), dans lequel on introduit dans le four (1) un mélange d'un oxyde métallique et de carbone, l'oxyde métallique dans le laitier (7) étant réduit par le carbone et les gaz qui se dégagent dans le laitier formant des bulles, celles-ci donnant lieu à la transformation du laitier en mousse, **caractérisé en ce qu'**on introduit dans le four le mélange d'oxyde métallique et de carbone sous la forme d'éléments moulés (8) comprimés et/ou muni d'un liant, configurés sous forme de boulettes, et **en ce qu'**on règle la masse volumique des éléments moulés (8) par addition d'un porteur de fer de telle sorte que les éléments moulés flottent dans le laitier (7).

2. Procédé selon la revendication 1, **caractérisé en ce qu'**on règle la masse volumique des éléments moulés (8) de telle sorte qu'ils flottent dans le laitier à proximité de l'interphase masse fondue (6) et laitier (7).

3. Procédé selon l'une quelconque des revendications 1 à 2, **caractérisé en ce qu'**on règle la masse volumique des éléments (8) de telle sorte que ces derniers se décomposent dans le laitier (7) lentement et de manière uniforme et de telle sorte que le dégagement gazeux se déroule de manière uniforme et pendant un laps de temps relativement long.

4. Procédé selon l'une quelconque des revendications 1 à 3, **caractérisé en ce qu'**on règle la masse volumique des éléments (8) de telle sorte que ces derniers se décomposent avec un décalage dans le temps.

5. Procédé selon l'une quelconque des revendications 1 à 4, **caractérisé en ce qu'**on ajoute en outre au mélange, un formateur de laitier, de préférence du calcaire.

6. Procédé selon l'une quelconque des revendications 1 à 5, **caractérisé en ce qu'**on ajoute en outre au mélange, un liquéfacteur de laitier, de préférence du $CaF_2$.

7. Procédé selon l'une quelconque des revendications 1 à 6, **caractérisé en ce qu'**on ajoute en outre au mélange, un agent de réduction, de préférence du silicium et/ou de l'aluminium.

8. Procédé selon l'une quelconque des revendications 1 à 7, **caractérisé en ce qu'**on introduit les éléments moulés (8) via les parois latérales (10) et/ou via le couvercle (4) du four à arc électrique (1).

9. Procédé selon l'une quelconque des revendications 1 à 8, **caractérisé en ce qu'**on introduit les éléments moulés (8) dans le laitier (7) en les orientant vers un endroit situé à proximité des points chauds des électrodes (5a-c) ou directement sur lesdits points chauds.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0014287 A
- WO 0140528 A1
- EP 0655508 A
- EP 0829545 B1